# FASCICULE DE BREVET EUROPEEN

(11) **EP 0 327 775 B1**
(45) Date de publication et mention de la délivrance du brevet: **15.06.1994**
(21) Numéro de dépôt: 88403346.5
(22) Date de dépôt: 28.12.1988
(51) Int. Cl.: B29D 11/00

(54) **Procédé de préparation d'optiques organiques, et application à la fabrication de préformes de fibres optiques polymères**
Verfahren zur Herstellung von Organo-Optik und dessen Anwendung bei der Herstellung von Vorformlingen für polymere optische Fasern
Process for the preparation of organical optical parts and its application to the manufacture of preproducts for polymeric optical fibres

(30) Priorité: 30.12.1987 FR 8718395
(43) Date de publication de la demande: 16.08.1989
(73) Titulaire: ELF ATOCHEM S.A., 92800 Puteaux (FR)
(72) Inventeur: Barbier, Yves, F-60700 Pontpoint (FR); Guillard, Yves, F-60100 Creil (FR); Perrin, Christian, F-78500 Sartrouville (FR)
(74) Mandataire: Eggert, Hans-Gunther, Dr.

(56) Documents cités:
- EP-A- 0 098 578
- EP-A- 0 131 058
- FR-A- 2 203 837
- FR-A- 2 405 806
- FR-A- 2 493 997
- US-A- 3 380 980
- US-A- 4 138 194

## Description

La présente invention a pour objet un procédé de préparation d'une couche d'optiques organiques polymères, essentiellement à base de monomères (méth)acryliques, les optiques organiques ainsi obtenues et son application à la fabrication de préformes de fibres optiques.

Par optiques organiques au sens de la présente invention, on entend les dispositifs optiques à base de polymères organiques mono-couches ou multi-couches.

Parmi les optiques organiques concernées par la présente invention, on peut citer les fibres optiques possédant une structure concentrique à deux couches, le coeur et la gaine, le coeur possédant un indice de réfraction supérieur à celui de la gaine. Dans ce dernier cas, le procédé selon l'invention concerne la préparation du coeur de la préforme, et accessoirement celle de la gaine.

Les préformes de coeur et les optiques organiques obtenues par les procédés connus de fabrication sous pression, tel que celui décrit par le document FR-A-2.405.806, ne sont pas satisfaisantes. En effet on constate la présence d'irrégularités en leur sein, en particulier des microbulles, ainsi que des irrégularités sur leur surface externe.

La présente invention a pour but d'éliminer les inconvénients précités.

Plus précisément, la présente invention a pour objet un procédé de préparation de la première couche d'optiques organiques, essentiellement à base de monomères méthacryliques et/ou acryliques, caractérisé en ce que l'on polymérise un mélange comprenant au moins un prépolymère, ayant un taux de conversion d'au moins 30 %, à base desdits monomères, au moins un initiateur de polymérisation et au moins un agent de transfert de chaine, sous atmosphère inerte (par exemple d'un gaz tel qu'un azote ou argon) et sous une pression d'au moins 5 bars.

Le taux de conversion du prépolymère est défini par le rapport de la quantité en poids de monomères polymérisés sur la quantité totale de monomères utilisés.

De préférence, la polymérisation est effectuée sous une pression d'au moins 15 bars. De préférence également, la polymérisation est effectuée en maintenant le mélange à polymériser sous atmosphère inerte et sous une pression d'au moins 15 bars, tout en maintenant la température du mélange dans une gamme de 30 à 100°C (de préférence 40° à 80°C) jusqu'à ce que le taux de conversion atteigne environ 95 %, en élevant la température pour atteindre une gamme de 120° à 180°C, (de préférence 120 à 140°C) jusqu'à l'obtention d'un taux de conversion au moins égal à 97 %, en continuant à élever la température jusqu'à une gamme de 160° à 180°C pendant au moins 2 heures, puis en refroidissant pour former l'optique organique solide.

Le dépôt de nouvelles couches de polymère sur l'optique organique mono-couche préparée conformément à la présente invention peut être réalisé de différentes manières.

Selon une première technique, on dépose une nouvelle couche sur l'optique organique mono-couche par extrusion de granulés ou de polymère pulvérulent, par exemple au moyen d'une boudineuse à vis. Si nécessaire, dans le même temps, l'optique organique mono-couche est extrudée à chaud dans une extrudeuse à piston.

De manière différente, on dépose une nouvelle couche sur l'optique organique mono-couche en la faisant passer dans un bain d'un polymère ou d'un prépolymère en solution, l'optique organique mono-couche ayant été au préalable, éventuellement extrudée dans une extrudeuse à piston. Après dépôt, l'optique organique est passé dans un four thermique ou four à rayonnement ultraviolet afin d'évaporer le solvant et, si nécessaire, afin de terminer la polymérisation du polymère ou du prépolymère.

Conformément à un mode de réalisation préféré, le dépôt d'une nouvelle couche sur l'optique organique mono-couche est effectué selon un procédé de préparation d'optiques organiques à saut(s) d'indice permettant d'obtenir des interfaces parfaitement transparentes entre les couches et consistant à appliquer et à polymériser sur la surface propre d'une optique mono-couche un mélange comprenant au moins un prépolymère, au moins un initiateur de polymérisation et un agent de transfert de chaines, sous atmosphère inerte et sous une pression d'au moins 5 bars. Selon ce mode de réalisation, le taux de conversion du prépolymère est réglé par les conditions de polymérisation, de température et par la nature des monomères. Ainsi, pour une optique organique mono-couche à base de monomères (méth)acryliques que l on recouvre d'une deuxième couche de polymères à base essentiellement de monomères (méth)acryliques tel que, par exemple, des (méth)acrylates d'alkyles et des (méth)acrylates d'alkyle fluorés avec une température de début de cycle de polymérisation dans une gamme de 30° à 120°C atteignant en fin de cycle une gamme de 120 à 160°C, on a découvert qu'en opérant sous une pression d'au moins 5 bars et en utilisant, pour la seconde couche, un prépolymère à base d'un ou de plusieurs monomères (méth)acryliques ayant un taux de conversion (tel que défini précédemment) d'au moins 38 %, on obtient une interface à saut d'indice parfaite entre ces deux couches, c'est-à-dire sans zone diffusante, ni autres irrégularités, par exemple des microbulles.

De plus, de manière surprenante, l'interface entre les deux couches est également exempte de toutes irrégularités même si la composition de ces couches a en commun un ou plusieurs monomères, à la condition que l'on opère dans les conditions prescrites par l'invention. Ces conditions conviennent parfaitement à des couches à base essentiellement de monomères (méth)acryliques, dont par exemple la première couche comprend au moins 80 % en poids de méthacrylate de méthyle et au plus 20 % en poids d'un monomère copolymérisable avec le méthacrylate de méthyle et/ou dont la deuxième couche comprend, pour 100 parties en poids :
- plus de 60 parties en poids de méthacrylate de 2,2,2-trifluoroéthyle,
- 20 à 40 parties en poids de méthacrylate de méthyle,
- à à 10 parties en poids d'autres monomères vinyliques.

Les meilleures qualités d'interfaces ont été obtenues avec une pression d'au moins 15 bars.

Le procédé de préparation d'optiques organiques selon l'invention est applicable à la préparation de préforme de fibres optiques, la première couche correspondant alors au coeur et la deuxième couche à la gaine.

Conformément à une mise en oeuvre préférée de l'invention, les préformes de fibres optiques sont préparées de la manière suivante :

### A - PREPARATION DU COEUR DE LA PREFORME

Conformément à l'invention, le coeur de la préforme est préparé par polymérisation d'un mélange constitué d'au moins un prépolymère à base essentiellement de monomères méthacryliques ou acryliques ayant un taux de conversion d'au moins 30 %, d'au moins un initiateur de polymérisation et d'au moins un agent de transfert de chaine, avec une pression d'au moins 5 bars.

La préparation du prépolymère de coeur est effectuée dans un réacteur propre, fermé et sous atmosphère d'un gaz inerte tel que l'azote ou l'argon.

Préalablement à la prépolymérisation, chaque constituant du mélange à prépolymériser est purifié afin d'éliminer les impuretés qui asborbent des longueurs d'ondes, en particulier l'inhibiteur de polymérisation contenu dans les monomères. La purification de ces constituants est effectuée selon des techniques bien connues parmi lesquelles la distillation sous vide. De préférence, les monomères sont soumis à traitement à la chaux sodée et/ou d'hydrure de calcium puis, passés sur lit d'alumine neutre ou basique, distillés et enfin filtrés sur un filtre qui a un diamètre d'ouverture d'environ 0,1 micron, et de préférence de l'ordre de 0,02 micron.

D'autre part, afin d'éviter la contamination des constituants purifiés lors de leur transfert dans le réacteur, ils sont transférés au moyen de conduites sous atmosphère d'un gaz inerte tel que l'azote et l'argon. La purification du réacteur est quant elle est effectuée par lavage avec un liquide de nettoyage, par exemple l'acétone, puis par séchage suivi d'une purge sous atmosphère inerte. Dans le réacteur propre et fermé, on introduit le mélange à polymériser dont chaque constituant a été purifié. Eventuellement, le mélange est purgé à l'aide d'un gaz inerte, tel que l'argon ou l'azote. Le mélange est ensuite mis sous agitation. La prépolymérisation est effectuée à une température de l'ordre de 70°C à pression atmosphérique, ou bien à température inférieure et sous pression.

Dès que le taux de conversion du prépolymère atteint au moins 30 %, on ralentit la prépolymérisation en refroidissant le réacteur.

Le prépolymère ainsi obtenu est coulé dans des tubes en matériau inerte tel que le verre borosilicaté, la silice ou l'inox, ces tubes ayant été au préalable lavés à l'aide d'un liquide de nettoyage tel que l'acétone puis séchés sous vide. De préférence, ces tubes sont fermés à leur extrémité inférieure à l'aide d'un bouchon choisi en matériau inerte par rapport au prépolymère et élastique de manière à rester en contact avec le mélange réactionnel lors de la polymérisation qui se traduit par une diminution du volume du mélange réactionnel. La pression imposée lors de la polymérisation contribue également à maintenir le contact entre le bouchon et le mélange à polymériser.

Les tubes sont ensuite fermés à leur extrémité supérieure avec des bouchons en matériau inerte et élastiques pour les raisons précitées.

Dans un réacteur fermé, sous atmosphère inerte on procède à la polymérisation du prépolymère tel que décrit précédemment.

Dès que le taux de conversion atteint 99 % à 99,9 %, on soumet le réacteur à un refroidissement progressif ; puis on démoule le coeur de préforme. Conformément à cette technique, on prépare des coeurs de dimensions diverses, dont le diamètre est généralement compris entre 6 et 80 mm.

### B - PREPARATION DU PREPOLYMERE CONSTITUTIF DE LA GAINE

Dans une première étape, on procède à la purification des monomères comme précisé dans la préparation du coeur.

La prépolymérisation du mélange comprenant au moins un monomère, au moins un inititateur de polymérisation et au moins un agent de transfert est effectuée dans un réacteur fermé, propre, c'est-à-dire préalablement lavé et séché sous vide, sous atmosphère inerte ; l'introduction de ce mélange est de préférence réalisée au moyen de conduites sous atmosphère inerte reliant le réacteur de prépolymérisation et les flacons dans lesquels sont recueillis les produits à l'issue de l'opération de purification.

Le mélange est ensuite mis sous agitation. La prépolymérisation est effectuée à une température de l'ordre de 70°C à pression atmosphérique et sous atmosphère inerte.

Dès que le taux de conversion atteint, dans le cas de monomères (méth)acryliques, la valeur d'au moins 38 %, on ralentit la prépolymérisation en refroidissant le réacteur, en général jusqu'à une température de l'ordre de 50°C.

### C - PREPARATION DE LA PREFORME PAR REVETEMENT DU COEUR AVEC UNE GAINE.

La première étape concerne la purification des éléments constitutifs de la préforme, tels que le barreau de coeur et les éléments qui seront en contact avec la préforme tels que le moule de la préforme s'ils ont été exposés à l'atmosphère ambiante.

Le barreau de coeur est lavé avec un agent de nettoyage inerte constitué par exemple par une partie du mélange de prépolymères de gaine, puis séché sous vide à une température de 30° à 90°C.

La surface externe du barreau de coeur peut également être dégazée par chauffage du barreau de 30° à 90°C sous pression réduite.

Le moule de la préforme, généralement en silice, inox ou verre borosilicaté, et purifié par lavage suivi d'un séchage sous vide.

Dans une deuxième étape, de préférence sous atmosphère inerte, on place le barreau de coeur dans le moule de manière à ce que les axes de symétrie du coeur et du moule coïncident. Ce positionnement est facilité au moyen d'un bouchon qui ferme le moule à son extrémité inférieure, et qui comporte, sur sa face interne placée dans le moule, une cavité centrale et cylindrique de diamètre égal à celui du barreau de coeur. Puis, on coule dans le moule, le mélange comprenant le prépolymère, l'initiateur de polymérisation et l'agent de transfert de chaine. Le remplissage du moule de la préforme peut également être réalisé en introduisant en premier le mélange à polymériser et ensuite le barreau de coeur.

Ensuite, on procède à nouveau à un dégazage sous vide, progressivement et pendant une période suffisamment longue pour éliminer les traces de gaz introduites dans le prépolymère lors de son introduction dans le moule. Le moule de préforme est ensuite fermé à l'aide d'au moins un bouchon élastique capable de rester en contact avec le mélange réactionnel pendant la polymérisation sous l'influence de la pression.

De préférence, les extrémités du moule sont fermées avec des bouchons élastiques choisis en matériau inerte par rapport au prépolymère, afin de minimiser l'apparition de microbulles en surface dans la préforme et de concentrer les retraits sur les deux extrémités.

On réalise ensuite l'opération de polymérisation comme indiqué précédemment.

Dès que la polymérisation est terminée, on refroidit le moule tout en maintenant la pression, puis on démoule la préforme de fibre optique polymère ainsi obtenue.

En se conformant au procédé selon l'invention, on prépare des préformes de fibre optique polymère dont les gaines ont généralement une épaisseur de 1 à 40 mm environ.

Eventuellement, la préforme peut être revêtue d'une nouvelle couche de protection, d'indice de réfraction différent de celui de la gaine. Pour ce faire, on reproduit de préférence les étapes (B) et (C) du mode opératoire décrit ci-dessus.

Finalement, la préforme ainsi obtenue peut être fibrée pour donner une fibre optique par des techniques bien connues telles que le fibrage à chaud de la préforme que l'on étire au travers d'une filière ou encore par filage à chaud de la préforme au moyen d'une extrudeuse à piston.

Parmi les monomères (méth)acryliques convenant à la préparation de la première couche de l'optique organique, telle que le coeur d'une fibre optique polymère, on peut citer notamment le méthacrylate de méthyle, le méthacrylate de méthyle deutéré, l'acrylate de méthyle, l'acrylate d'éthyle, l'acrylate de propyle, l'acrylate de butyle, l'acrylate d'éthyle-2-hexyle, les esters méthacryliques correspondants et d'autres esters tels que le méthacrylate de phényle, le méthacrylate de cyclohexyle, le méthacrylate de benzyle. Ces monomères peuvent éventuellement être copolymérisés avec une faible proportion, par exemple jusqu'à 20 % environ en poids d'un comonomère tel que le styrène et ces homologues substitués (halogénés ou alkylés) sur le noyau aromatique ou sur la fonction vinylique tels que l'α-méthylstyrène, l'α-chlorostyrène.

Parmi les monomères convenant à la prépration de la deuxième couche, telle que la gaine d'une préforme de fibre optique polymère, on peut citer les (méth)acrylates d'alkyles fluorés, tels que le (méth)acrylate de 2,2,2-trifluoroéthyle et ceux cités dans les brevets français 2.493.997 et 2.405.807, auxquels on adjoint éventuellement un ou plusieurs comonomères choisis, par exemple, parmi les esters (méth)acryliques tels que le (méth)acrylate de méthyle, le (méth)acrylate d'éthyle, le (méth)acrylate de propyle, le (méth)acrylate de butyle, le (méth)acrylate d'éthyle-2-hexyle.

Parmi les initiateurs de polymérisation convenant à l'invention, on peut citer les initiateurs de type azoïque, tels que le 2,2'-azo-bis(isobutyronitrile) l'acide azo 4,4' bis(cyano-4-pentanoïque). Conviennent également les peroxydes tels que le peroxyde de benzoyle, le peroxyde de lauryle, le perdécanoate de tertiobutyle, le perbenzoate de tertiobutyle, les peroxydicarbonates tels que le peroxydicarbonate de bis (tertiobutyl-4-cyclohexyle), le peroxydicarbonate de n-butyle, le peroxydicarbonate de cyclohexyle, le peroxydicarbonate de (bis-éthyle-2-hexyle), le peroxydicarbonate d'isopropyle. Les quantités d'initiateur à mettre en oeuvre dans le procédé selon l'invention varient de 0,005 à 0,5 % en poids par rapport aux monomères à polymériser.

Parmi les agents de transfert de chaine convenant à l'invention, on peut citer les mercaptans, tels que le n-butyl-mercaptan, le n-dodécylmercaptan, le n-lauryl-mercaptan. Conviennent également les agents de transfert de chaines cités dans le brevet français 2.405.807. Les quantités d'agent de transfert de chaine à mettre en oeuvre dans le procédé selon l'invention varient de 0,01 à 0,5 % en poids par rapport aux monomères à polymériser.

Il va de soi que la présente invention n'est pas limitée aux préformes de fibres optiques polymères mais s'étend à tous les dispositifs organiques polymères mono et multi-couches. De même, la présente invention n'est en aucun cas limitée à des dispositifs de forme cylindrique.

Les optiques organiques préparées conformément au procédé selon l'invention possèdent le double avantage d'être exemptes de microbulles en leur sein et d'irrégularités sur leur surface externe dues au retrait lors de la polymérisation.

Les exemples suivants sont donnés à titre illustratif et non limitatif de l'invention.

### EXEMPLE 1

### A - PREPARATION DU BARREAU DE COEUR

### A.1 Préparation du mélange à polymériser et du réacteur

Le réacteur à double enveloppe est lavé à l'acétone, vidangé puis séché.

Le mélange à prépolymériser est constitué de 100 parties en poids de méthacrylate de méthyle (MAM), de 0,05 partie en poids de 2,2'-azo-bis-(isobutyronitrile) (AIBN), et de 0,31 partie en poids de n-dodécyl-mercaptan (DDM). Préalablement au mélange, chaque constituant est purifié comme suit :
- le MAM est traité à la chaux sodée, passé sur un lit d'aluminium puis distillé à 54°C sous 130 millibars, et enfin filtré sur filtre de porosité 0,1 micron
- l'AIBN et le DDM sont distillés sous pression réduite.

En attendant leur introduction dans le réacteur, MAM, AIBN et DDM sont conservés sous atmosphère inerte d'azote, séparément dans des ampoules qui sont reliées au réacteur par des conduites.

### A.2 - Préparation du prépolymère

Le réacteur de prépolymérisation est fermé, purgé à l'azote, puis mis en température au moyen d'une circulation d'eau à 70°C dans la double enveloppe. Dès que la température dans le réacteur atteint 60°C, on introduit le MAM, l'AIBN et le DDM, puis le mélange est mis sous agitation et la température est portée à environ 70°C sous la pression atmosphérique.

Au cours de la prépolymérisation, on mesure régulièrement le taux de conversion du mélange par prélèvement d'une petite quantité qu'on analyse par chromatographie en phase gazeuse.

Dès que le taux de conversion atteint 30 %, la prépolymérisation est ralentie en refroidissant le réacteur jusqu'à 25°C.

### A.3 - Préparation du barreau de coeur

Les barreaux de coeur sont préparés dans des tubes en verre borosilicaté de diamètre intérieur égal à 37 mm et lavés à l'eau puis à l'acétone et séchés sous vide. La base de ces tubes est fermée d'un bouchon en élastomère. Le mélange de prépolymère est réchauffé jusqu'à environ 35°C puis introduit progressivement dans les tubes sous atmosphère inerte.

On soumet ensuite les tubes à une opération de dégazage jusqu'à l'obtention d'un vide de 133 millibars pendant environ 1 heure.

A la fin de cette opération, les tubes sont fermés à leur extrémité supérieure avec des bouchons en élastomère.

Les tubes sont placés dans un autoclave qui, après sa fermeture, est purgé et mis sous atmosphère d'azote.

On procède ensuite à la polymérisation en imposant une pression de 15 bars et le cycle de polymérisation suivant :

| Temps écoulé (en h) | Température dans l'autoclave en °C | Taux de conversion en % |
|---|---|---|
| 0 | 50 | 30 |
| 20 | 88 | 95 |
| 25 | 142 | 97 |
| 28-30 | 167 | 99,5 |

On diminue ensuite progressivement la température, la pression de 15 bars étant maintenue. Dès que la température dans l'autoclave atteint 25°C, on diminue progressivement la pression jusqu'à 1 atmosphère.

Les barreaux de coeur obtenus sont parfaitement transparents, exempts de défauts tels que des microbulles ou impuretés. De plus, leur surface externe ne comporte pas d'irrégularités dues au retrait lors de la polymérisation. Ils sont ensuite séchés sous vide de 20 millibars, afin d'éliminer les traces de monomères résiduels, puis conservés sous atmosphère d'azote.

### B - PREPARATION DE LA PREFORME COEUR-GAINE DE FIBRE OPTIQUE POLYMERE

### B.1 Préparation du prépolymère constitutif de la gaine

Le mélange à polymériser est constitué de (en parties en poids) :

| | |
|---|---|
| - Méthacrylate de 2,2,2-trifluoroéthyle | 75 |
| - MAM | 20 |
| - Acrylate d'éthyle-2-hexyle | 5 |
| - AIBN | 0,05 |
| - peroxyde de tertio-butyle | 0,02 |
| - DDM | 0,1 |

Les monomères sont purifiés comme indiqué ci-dessus. Les initiateurs de polymérisation et l'agent de transfert de chaine sont purifiés par distillation sous vide. En attendant leur introduction dans le réacteur, chaque constituant est conservé séparément, sous azote, dans des ampoules qui sont reliées au réacteur par des conduites.

Le réacteur est également lavé à l'acétone, vidangé, puis séché. Ensuite, le réacteur est fermé puis purgé et mis sous azote. Par une circulation d'eau dans la double enveloppe, on impose une température de 70°C dans le réacteur. On y introduit alors les constituants du mélange à prépolymériser que l'on met ensuite sous agitation. La prépolymérisation est effectuée à 70°C sous atmosphère inerte, à la pression atmosphérique.

Après 150 minutes, on arrête la prépolymérisation en refroidissant le réacteur à 50°C. Le taux de conversion du prépolymère mesuré par chromatographie en phase gazeuse est de 43 %.

### B.2 - Préparation de la préforme coeur-gaine

Les préformes sont préparées dans des tubes en verre borosilicaté, de diamètre intérieur égal à 42 mm et lavés à l'eau, puis à l'acétone et séchés sous vide.

La base des tubes est fermée à l'aide de bouchons en élastomère comportant sur leur côté disposé dans le tube une cavité centrale et cyclindrique dont les dimensions correspondent à celles de l'embout des barreaux de coeur.

On coule progressivement le prépolymère dans les tubes qu'on soumet à un dégazage progressif (30 minutes à 533 millibars puis 15 minutes à 266 millibars et 15 minutes à 133 millibars). Ensuite, on introduit dans chaque tube le barreau de coeur en position centrale de manière que son grand axe coïncide avec celui du tube.

On place les tubes ainsi remplis dans un autoclave que l'on purge à l'azote dès sa fermeture.

On procède ensuite à la polymérisation en imposant une pression de 15 bars et le cycle de polymérisation suivant :

| Temps écoulé (en h) | Température dans l'autoclave en °C | Taux de conversion en % |
|---|---|---|
| 0 | 70 | 43,0 |
| 10 | 90 | 96,0 |
| 14 | 130 | 99,6 |

On diminue alors progressivement la température, la pression de 15 bars étant maintenue. Dès que la température dans l'autoclave atteint 25°C, on diminue progressivement la pression jusqu'à 1 atmosphère.

Les préformes coeur-gaine obtenues sont parfaitement transparentes et l'interface est totalement exempte de zone de diffusion et d'impuretés. De plus, la surface externe de la préforme est parfaitement régulière.

### EXEMPLES 2 à 4

On répète le mode opératoire de l'exemple 1 à l'exception de la pression imposée lors de la préparation du barreau de coeur, indiquée dans le tableau I ci-après.

### EXEMPLES 5 à 7

On répète le mode opératoire de l'exemple 1 excepté la composition du barreau de coeur, qui est précisée ci-après dans le tableau II (toutes les quantités sont exprimées en parties en poids).

**TABLEAU I**

| Exemple | Pression (bars) | Etat du barreau de coeur |
|---|---|---|
| 2 | 1 | entièrement bullé |
| 3 | 5 | parfaitement transparent et sans défaut de surface |
| 4 | 30 | parfaitement transparent et sans défaut de surface |

**TABLEAU II**

| Exemple | composition du copolymère | Initiateur de polymérisation | Agent de transfert de chaine | Aspect du barreau |
|---|---|---|---|---|
| 5 | MAM : 95 | AIBN : 0,05 | DDM : 0,31 | transparent et sans défaut |
| | MAE : 5 | | | |
| 6 | MAM : 85 | AIBN : 0,05 | DDM : 0,31 | transparent et sans défaut |
| | MAE : 15 | PTB : 0,02 | | |
| 7 | MAM : 90 | PL : 0,12 | DDM : 0,12 | transparent et sans défaut |
| | MAE : 10 | | | |
| On utilise les abréviations suivantes : - MAE : méthacrylate d'éthyle - AE : acrylate d'éthyle - PTB : perbenzoate de tertiobutyle - PL : peroxyde de lauryle. | | | | |

## Revendications

1. Procédé de préparation de la première couche d'optiques organiques, essentiellement à base de monomères méthacryliques et/ou acryliques, caractérisé en ce que l'on polymérise un mélange comprenant au moins un prépolymère, ayant un taux de conversion d'au moins 30 % à base desdits monomères, au moins un initiateur de polymérisation et au moins un agent de transfert de chaîne sous atmosphère inerte et sous une pression d'au moins 5 bars.

2. Procédé selon la revendication 1, caractérisé en ce que la polymérisation est effectuée sous une pression d'au moins 15 bars.

3. Procédé selon la revendication 2, caractérisé en ce que la polymérisation est effectuée en maintenant le mélange à polymériser sous atmosphère inerte et sous une pression d'au moins 15 bars, tout en maintenant la température du mélange dans une gamme de 30° à 100°C jusqu'à ce que le taux de conversion atteigne 95 %, en élevant la température pour atteindre une gamme de 120° à 180°C jusqu'à l'obtention d'un taux de conversion au moins égal à 97 %, en continuant à élever la température jusqu'à une gamme de 160° à 180°C pendant au moins 2 heures, puis en refroidissant pour former l'optique organique solide.

4. Procédé conforme à l'une des revendications 1 à 3, caractérisé en ce que l'on utilise comme monomères méthacryliques et/ou acryliques des monomères choisis dans le groupe formé par le (méth)acrylate de méthyle, le méthacrylate de méthyle deutéré, le (méth)acrylate d'éthyle, le (méth)acrylate de propyle, le (méth)acrylate de butyle, le (meth)acrylate d'éthyl-2-hexyle, le méthacrylate de phényle, le méthacrylate de cyclohexyle, le méthacrylate de benzyle.

5. Procédé conforme à la revendication 4, caractérisé en ce que les monomères (méth)acryliques sont associés à des comonomères, en quantité d'au plus 20 % en poids, et choisis dans le groupe formé par le styrène et ses homologues substitués par des halogènes ou des groupes alkyle sur le noyau aromatique ou sur la fonction vinylique.

6. Procédé conforme à la revendication 5 caractérisé en ce que la couche est obtenue à partir d'un mélange de monomères compren ant au moins 80 % en poids de méthacrylate de méthyle et au plus 20 % d'un monomère copolymérisable avec le méthacrylate de méthyle.

7. Procédé de dépôt d'une nouvelle couche sur une optique organique mono-couche préparée conformément à l'une des revendications 1 à 6, caractérisé en ce que le dépôt est effectué par extrusion de granulés ou de polymère pulvérulent.

8. Procédé de dépôt d'une nouvelle couche sur une optique organique mono-couche préparée conformément à l'une des revendications 1 à 6, caractérisé en ce que l'on fait passer l'optique organique mono-couche dans un bain d'un polymère ou d'un prépolymère en solution.

9. Application du procédé décrit dans l'une quelconque des revendications 1 à 6, à la fabrication de préforme de coeur des fibres optiques polymères.

10. Application du procédé décrit dans l'une quelconque des revendications 7 et 8, à la fabrication de préforme coeurgaine des fibres optiques polymères.

## Claims

1. Process for the preparation of the first layer of organic optics, essentially based on methacrylic and/or acrylic monomers, characterized in that a mixture is polymerized comprising at least one prepolymer which has a degree of conversion of at least 30 % based on the said monomers, at least one polymerization initiator and at least one chain transfer agent under inert atmosphere and at a pressure of at least 5 bars.

2. Process according to Claim 1, characterized in that the polymerization is performed at a pressure of at least 15 bars.

3. Process according to Claim 2, characterized in that the polymerization is performed by maintaining the mixture to be polymerized under inert atmosphere and at a pressure of at least 15 bars while maintaining the temperature of the mixture in a range from 30° to 100°C until the degree of conversion reaches 95 %, raising the temperature to reach a range from 120° to 180°C until a degree of conversion of at least 97 % is obtained, continuing to raise the temperature to a range from 160° to 180°C for at least 2 hours, and then cooling to form the solid organic optic.

4. Process in accordance with one of Claims 1 to 3, characterized in that the methacrylic and/or acrylic monomers employed are monomers chosen from the group made up of methyl (meth)acrylate, deuterated methyl methacrylate, ethyl (meth)acrylate, propyl (meth)acrylate, butyl (meth)acrylate, 2-ethylhexyl (meth)acrylate, phenylmethacrylate, cyclohexyl methacrylate and benzyl methacrylate.

5. Process in accordance with Claim 4, characterized in that the (meth)acrylic monomers are used in combination with comonomers, in a quantity of not more than 20 % by weight, and chosen from the group made up of styrene and its homologues substituted by halogens or alkyl groups on the aromatic nucleus or on the vinyl functional groups.

6. Process in accordance with Claim 5, characterized in that the layer is obtained from a mixture of monomers comprising at least 80 % by weight of methyl methacrylate and not more than 20 % of a monomer copolymerizable with methyl methacrylate.

7. Process for depositing a new layer on a monolayer organic optic prepared in accordance with one of Claims 1 to 6, characterized in that the deposition is performed by extrusion of granules or of pulverulent polymer.

8. Process for depositing a new layer on a monolayer organic optic prepared in accordance with one of Claims 1 to 6, characterized in that the monolayer organic optic is passed through a bath of a polymer or prepolymer in solution.

9. Application of the process described in any one of Claims 1 to 6 to the manufacture of a core preform for polymer optical fibres.

10. Application of the process described in either of Claims 7 and 8 to the manufacture of a core-cladding preform for polymer optical fibres.

## Patentansprüche

1. Verfahren zur Herstellung einer ersten organo-optischen Schicht, im wesentlichen ausgehend von Methacryl und/oder Acrylmonomeren, dadurch gekennzeichnet, daß man eine Mischung unter Schutzgasatmosphäre bei einem Druck von 5 bar polymerisiert, die mindestens ein Prepolymer mit einem Umwandlungsgrad von mindestens 30 % auf Basis der genannten Monomere, mindestens einen Polymerisationsinitiator und mindestens ein Kettenübertragungsmittel enthält.

2. Verfahren nach Anspruch 1, dadurch gekennzeichnet, daß die Polymerisation bei einem Druck von mindestens 15 bar durchgeführt wird.

3. Verfahren nach Anspruch 2, dadurch gekennzeichnet, daß die Polymerisation unter Schutzgasatmosphäre bei einem Druck von mindestens 15 bar durchgeführt und daß die Temperatur der Mischung in einem Bereich von 30 bis 100 °C gehalten wird, bis ein Umwandlungsgrad von 95 % erreicht ist, und die Temperatur auf einen Bereich von 120 bis 180 °C erhöht wird, bis man einen Umwandlungsgrad von mindestens 97 % erreicht und die Temperatur weiter erhöht wird, bis zu einem Bereich von 160 bis 180 °C für 2 Stunden und dann abgekühlt wird, um eine feste Organo-Optik zu erhalten.

4. Verfahren nach einem der Ansprüche 1 bis 3, dadurch gekennzeichnet, daß man als Methacryl und/oder Acrylmonomere die Monomeren aus der Gruppe der Methyl(meth)acrylate, deutrierten Methyl(meth)acrylate, Ethyl(meth)acrylate, Propyl(meth)acrylate, Butyl(meth)acrylate, Ethyl-2-hexyl(meth)acrylate, Phenylmethacrylate, Cyclohexylmethacrylate und Benzylmethacrylate auswählt.

5. Verfahren nach Anspruch 4, dadurch gekennzeichnet, daß die (Meth)acrylmonomeren mit Comonomeren bis zu einem Anteil von 20 Gew.-% verbunden sind, die aus der Gruppe von Styrol und seinen durch Halogene oder Alkylgruppen am aromatischen Kern oder an der Vinylfunktion substituierten Homologen gewählt sind.

6. Verfahren nach Anspruch 5, dadurch gekennzeichnet, daß die organo-optische Schicht aus einer Monomerenmischung erhalten wird, die mindestens 80 Gew.-% Methylmethacrylat und höchstens 20 Gew.-% eines mit Methylmethacrylat copolymerisationsfähigen Monomeren beinhaltet.

7. Verfahren zur Ablagerung einer neuen Schicht auf einer einschichtigen Organo-Optik, die nach einem der Ansprüche 1 bis 6 hergestellt wurde, dadurch gekennzeichnet, daß die Ablagerung durch Extrusion von Granulat oder pulverförmigen Polymeren erfolgt.

8. Verfahren zur Ablagerung einer neuen Schicht auf einer einschichtigen Organo-Optik, die nach einem der Ansprüche 1 bis 6 hergestellt wurde, dadurch gekennzeichnet, daß man die einschichtige Organo-Optik durch ein Bad einer Lösung eines Polymers oder eines Prepolymers führt.

9. Anwendung der in einem der Ansprüche 1 bis 6 beschriebenen Verfahren zur Herstellung von Vorformlingen für Kerne polymerer optischer Fasern.

10. Anwendung der in einem der Ansprüche 7 und 8 beschriebenen Verfahren zur Herstellung von Kern-Ummantelungs-Vorformlingen polymerer optischer Fasern.
